# FASCICULE DE BREVET EUROPEEN

(11) **EP 1 480 863 B1**
(45) Date de publication et mention de la délivrance du brevet: **22.02.2006**
(21) Numéro de dépôt: 03722689.1
(22) Date de dépôt: 04.03.2003
(51) Int. Cl.: B61H 1/00, B61H 13/34

(54) **DISPOSITIF DE FIXATION D-UN PALONNIER DE LIAISON SUR UN FREIN A SEMELLE POUR BOGGIE FERROVIAIRE**
BEFESTIGUNGSVORRICHTUNG ZWISCHEN EINER QUERSTANGE UND EINEM BREMSKLOTZE FÜR EIN EISENBAHNDREHGESTELL
DEVICE FOR FIXING A CONNECTING CROSSBAR TO A SHOE BRAKE FOR A RAIL BOGIE

(30) Priorité: 05.03.2002 FR 0202780
(43) Date de publication de la demande: 01.12.2004
(73) Titulaire: C.G.L. S.A.R.L., 53960 Bonchamp Les Laval (FR)
(72) Inventeur: LELASSEUX, Gérard, F-53960 Bonchamps-les-Laval (FR); SYZMANSKI, Stéphane, F-38570 Le Minihic sur Ranse (FR)
(74) Mandataire: Puiroux, Guy
(86) Numéro de dépôt international: PCT/FR2003/000685
(87) Numéro de publication internationale: WO 2003/074339

(56) Documents cités:
- DE-A- 3 809 863
- DE-B- 1 028 604
- US-A- 1 392 368

## Description

La présente invention concerne des perfectionnements aux dispositif de freinage utilisés sur les boggies ferroviaires. Elle concerne plus particulièrement des moyens permettant de faciliter le démontage/remontage des organes de commande de ces dispositifs.

On sait qu'un boggie est essentiellement constitué d'un châssis support qui est maintenu sur les rails par deux trains de roues qui sont réunis par deux essieux respectifs. Ces boggies sont pourvus de dispositifs de freinage pouvant être constitués soit par des freins à disque soit par des freins à semelle.

La présente invention concerne ces derniers dispositifs de freinage, qui sont essentiellement constitués d'une semelle qui est appliquée sur la périphérie d'une roue par des moyens d'actionnement, constitués la plupart du temps par un piston mobile dans un cylindre de commande sous l'action d'un fluide pneumatique. Dans certains dispositifs la tête de piston n'agit pas directement sur la semelle, mais sur l'extrémité d'une biellette montée pivotante à sa base et qui est reliée à la semelle, ce qui présente, entre autres avantages, d'offrir un gain de place dans le sens longitudinal du boggie.

Afin d'améliorer la régularité du freinage des deux roues solidaires d'un même essieu, on réunit les moyens de commande agissant sur les semelles de ces deux roues par un palonnier transversal. De façon pratique, ce palonnier est ainsi habituellement fixé par chacune de ses extrémités, aux extrémités libres de chacune des deux biellettes pivotantes commandées par le piston, si bien que toute action de l'un de ces derniers sur une biellette pivotante retransmet à l'autre biellette ce même déplacement.

Dans les dispositifs de l'état antérieur de la technique, chaque extrémité du palonnier est usinée en forme de tenon et celui-ci s'encastre dans un orifice de l'extrémité correspondante de la biellette. Son immobilisation en translation est ensuite assurée, à chacune de ces extrémités, par une goupille ou une clavette.

On comprend dans ces conditions que le montage du palonnier dans les biellettes pivotantes ne peut se faire qu'avant la mise en place de celles-ci sur le dispositif de freinage et, à l'inverse, le démontage du palonnier ne peut être obtenu qu'après avoir préalablement procédé au démontage des biellettes. Il en résulte qu'un tel mode de fixation est de nature à compliquer fortement le montage et le démontage des moyens de commande de la semelle de freinage.

La présente invention a pour but de remédier à cet inconvénient en proposant des moyens de fixation du palonnier sur les biellettes qui autorisent un montage et un démontage sans qu'il soit nécessaire d'intervenir préalablement sur celles-ci.

La présente invention a ainsi pour objet un dispositif de fixation d'un palonnier destiné à réunir deux biellettes de commande respectivement associées à des moyens de freinage à semelle pour bogies ferroviaires, caractérisé en ce que chaque extrémité du palonnier vient sensiblement en appui contre une biellette et en ce qu'il comporte un élément de fixation traversant cette biellette et venant se loger dans une extrémité du palonnier, cet élément de fixation étant pourvu de moyens aptes à assurer sa solidarisation en translation avec la biellette.

Suivant l'invention l'élément de fixation pourra possèder, à son extrémité externe, une butée en contact avec la biellette suivie d'une seconde butée de plus grande dimension transversale, de façon à former une gorge destinée à faciliter son extraction.

L'élément de fixation et sa butée pourront être constitués de pièces de forme cylindrique et les moyens d'immobilisation en translation pourront être constitués d'une goupille traversant le palonnier et l'élément de fixation. Ces moyens d'immobilisation en translation pourront également être constitués d'une vis prenant place dans la biellette et dont une partie pourra pénètrer dans l'élément de fixation.

On décrira ci-après, à titre d'exemple non limitatif, des formes d'exécution de la présente invention, en référence aux dessins annexés sur lesquels :
La figure 1 est une vue partielle en perspective d'un dispositif de freinage à semelle équipé de moyens de fixation d'un palonnier à l'extrémité d'un levier de transmission.
La figure 2 est une vue partielle en coupe longitudinale suivant l'axe du palonnier d'une extrémité de celui-ci et de ses moyens de liaison avec un levier de transmission pivotant.
Les figures 3 et 4 sont des vues partielles en coupe longitudinale suivant l'axe du palonnier représentant des variantes de mise en oeuvre du dispositif de la figure 2.

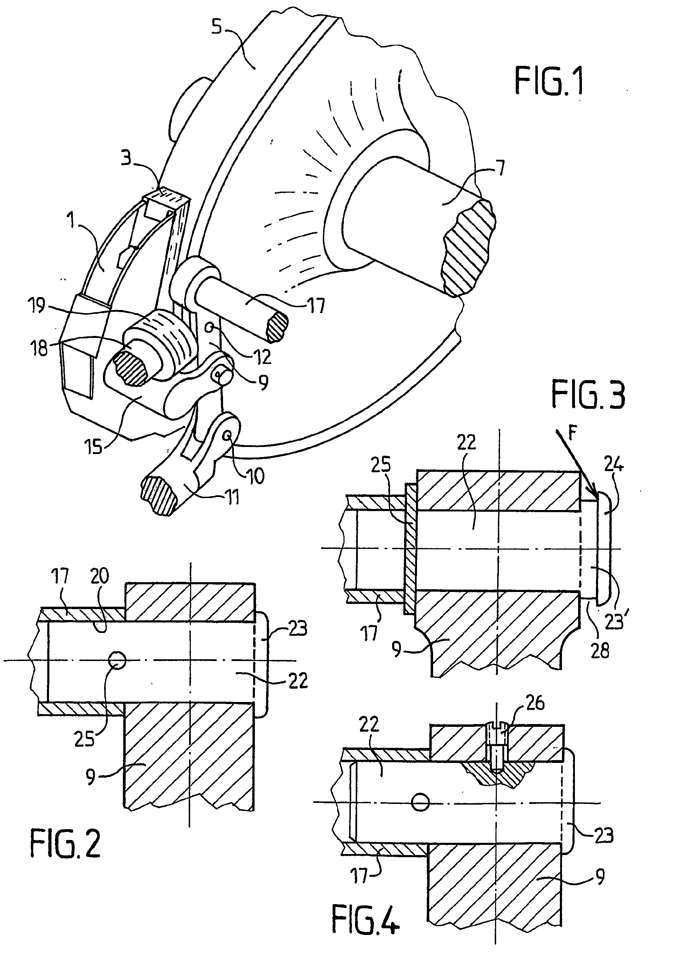

On a représenté sur les figures 1 et 2 un dispositif de freinage à semelle pour boggie ferroviaire qui est, de façon connue, constitué d'un porte-semelle 1 sur lequel est fixé une semelle 3 qui est destinée à être appliquée, par des moyens d'actionnement, sur la périphérie d'une roue 5 du boggie qui est solidaire d'un essieu 7. Ces moyens d'actionnement sont constitués d'une biellette 9 qui est montée pivotante à sa partie inférieure par une articulation 10 sur une chape 11 d'un élément support solidaire du châssis du boggie non représenté sur le dessin. Le porte-semelle 1 est réuni, par une entretoise 15, à la biellette 9. L'extrémité libre de cette dernière est solidarisée, par un palonnier 17, de l'extrémité libre de la biellette associée à l'autre roue du même essieu 7. Un piston 18 mobile dans un cylindre de frein (non représenté sur le dessin) est relié, par l'intermédiaire d'un régleur 19, à la biellette 9 par une articulation 12 qui est située sous la liaison du palonnier 17 avec cette biellette 9.

Dans ces conditions, on comprend que tout mouvement de déplacement longitudinal du piston 18 a pour effet de faire pivoter la biellette 9 autour de son articulation inférieure 10 et de déplacer le porte-semelle 1 par rapport à la périphérie de la roue 5. Ce déplacement de la biellette 9 assure également le déplacement du palonnier 17, et en conséquence celui de la biellette qui est associé à l'autre roue solidaire du même essieu 7.

Suivant l'invention le palonnier 17 vient en appui par chacune de ses extrémités contre la face interne de chacune des biellettes 9. Sa fixation sur ces dernières est assurée par un élément cylindrique 22 qui traverse chaque biellette 9 pour venir se loger dans un chambrage 20 du palonnier 17, et qui est pourvu d'une tête 23. Une goupille 25 traverse la palonnier 17 et l'élément 22 et assure l'immobilisation en translation du palonnier 17 par rapport aux deux biellettes 9 associées.

Ainsi que représenté sur la figure 4, l'immobilisation en translation de l'élément 22 pourrait également être assurée par une vis 26 vissée à l'extrémité supérieure de la biellette 9 et qui traverserait celle-ci pour se loger dans l'élément de fixation 22.

Dans une variante de mise en oeuvre de l'invention représentée sur la figure 3, l'élément de fixation 22 se termine, à chacune de ses extrémités, par une tête 23' venant en butée sur la face externe de la biellette 9 qui est suivie d'un méplat 24 de plus grand diamètre, de façon que celui-ci forme une gorge 28 avec la surface externe de la biellette 9.

L'immobilisation en translation de l'élément de fixation 22 est assurée par une rondelle 23 de type "circlip" qui prend place dans une rainure circulaire réalisée sur l'élément 22.

Une telle disposition est intéressante en ce qu'elle permet de favoriser l'extraction de l'élément de fixation 22 en appliquant, ainsi que représenté sur la figure 3 un effort de direction F sur le méplat 24.

## Revendications

1. Dispositif de fixation d'un palonnier (17) destiné à réunir deux biellettes de commande (9) respectivement associées à des moyens de freinage à semelle pour boggies ferroviaires, **caractérisé en ce que** chaque extrémité du palonnier (17) vient sensiblement en appui contre une biellette (9) et **en ce qu'**il comporte un élément de fixation (22) traversant cette biellette (9) et venant se loger dans une extrémité du palonnier (17), cet élément de fixation (22) étant pourvu de moyens aptes à assurer sa solidarisation en translation avec la biellette (9).

2. Dispositif selon la revendication 1 **caractérisé en ce que** l'élément de fixation (22) possède, à son extrémité externe, une butée (24) en contact avec la biellette (9), suivie d'une seconde butée de plus grande dimension transversale, de façon à former une gorge destinée à faciliter son extraction.

3. Dispositif selon la revendication 2 **caractérisé en ce que** l'élément de fixation (22) et sa butée (2.4) sont constitués de pièces de forme cylindrique.

4. Dispositif selon l'une des revendications 1 à 3 **caractérisé en ce que** les moyens d'immobilisation en translation sont constitués d'une goupille (25) qui traverse le palonnier (17) et l'élément de fixation (22).

5. Dispositif selon l'une des revendications 1 à 3 **caractérisé en ce que** les moyens d'immobilisation en translation sont constitués d'une vis (26) prenant place dans la biellette (9) et dont une partie pénètre dans l'élément de fixation (22).

## Patentansprüche

1. Vorrichtung zur Befestigung einer Querstange (17), die dazu dient, zwei Steuerschwingarme (9) zu verbinden, die jeweils Klotzbremseinrichtungen für Eisenbahndrehgestelle zugehörig sind, **dadurch gekennzeichnet, dass** jedes Ende der Querstange (17) im Wesentlichen gegen einen Schwingarm (9) zur Anlage kommt und dass es ein Befestigungselement (22) aufweist, das sich durch diesen Schwingarm (9) hindurch erstreckt und in einem Ende der Querstange (17) aufgenommen wird, wobei das Befestigungselement (22) mit Einrichtungen versehen ist, die für eine in Translationsrichtung feste Verbindung mit dem Schwingarm (9) sorgen.

2. Vorrichtung nach Anspruch 1, **dadurch gekennzeichnet, dass** das Befestigungselement (22) an seinem äußeren Ende einen Anschlag (24), der sich in Kontakt mit dem Schwingarm (9) befindet, gefolgt von einem zweiten Anschlag größerer Transversalabmessung aufweist, derart, dass eine Hohlkehle erzeugt wird, die dessen Herausziehen erleichtert.

3. Vorrichtung nach Anspruch 2, **dadurch gekennzeichnet, dass** das Befestigungselement (22) und sein Anschlag (24) aus Teilen zylindrischer Form bestehen.

4. Vorrichtung nach einem der Ansprüche 1 bis 3, **dadurch gekennzeichnet, dass** die Einrichtungen zur in Translationsrichtung festen Anbringung aus einem Stift (25) bestehen, der sich durch die Querstange (17) und das Befestigungselement (22) hindurch erstreckt.

5. Vorrichtung nach einem der Ansprüche 1 bis 3, **dadurch gekennzeichnet, dass** die Einrichtungen zur in Translationsrichtung festen Anbringung aus einer Schraube (26) bestehen, die in den Schwingarm (9) eingesetzt ist und von der ein Teil in das Befestigungselement (22) eindringt.

## Claims

1. Device for fixing a crossbar (17) intended to connect two control connecting rods (9) respectively associated with shoe braking means for rail bogies, **characterized in that** each end of the crossbar (17) comes substantially into abutment against a connecting rod (9) and **in that** it comprises a fixing element (22) traversing this connecting rod (9) and being housed in one end of the crossbar (17), this fixing element (22) being provided with means adapted to ensure connection thereof in translation with the connecting rod (9).

2. Device according to Claim 1, **characterized in that** the fixing element (22) presents, at its outer end, a stop (24) in contact with the connecting rod (9), followed by a second stop of larger transverse dimension, so as to form a groove intended to facilitate its extraction.

3. Device according to Claim 2, **characterized in that** the fixing element (22) and its stop (24) are constituted by parts of cylindrical shape.

4. Device according to one of Claims 1 to 3, **characterized in that** the means for immobilisation in translation are constituted by a pin (25) which passes through the crossbar (17) and the fixing element (22).

5. Device according to one of Claims 1 to 3, **characterized in that** the means for immobilisation in translation are constituted by a screw (26) located in the connecting rod (9) and of which a part penetrates in the fixing element (22).
